# EUROPEAN PATENT SPECIFICATION

(11) **EP 1 329 368 B1**
(45) Date of publication and mention of the grant of the patent: **12.07.2006**
(21) Application number: 03000933.6
(22) Date of filing: 16.01.2003
(51) Int. Cl.: B60R 25/02

(54) **Steering locking device**
Lenkschlossvorrichtung
Dispositif de verrouillage de la direction

(30) Priority: 17.01.2002 JP 2002008951
(43) Date of publication of application: 23.07.2003
(73) Proprietor: JTEKT Corporation, Osaka-shi Osaka 542-8502 (JP)
(72) Inventor: Tsutsui, Takashi, c/o Koyo Seiko Co., Ltd., Osaka-shi, Osaka 542-0081 (JP); Kitami, Etsurou, c/o Koyo Seiko Co., Ltd., Osaka-shi, Osaka 542-0081 (JP); Murakami, Hiroaki, c/o Koyo Seiko Co., Ltd., Osaka-shi, Osaka 542-0081 (JP); Maekawa, Tomohiro, c/o Koyo Seiko Co., Ltd., Osaka-shi, Osaka 542-0081 (JP)
(74) Representative: Steil, Christian

(56) References cited:
- WO-A-92/16395
- DE-C- 4 422 436
- FR-A- 2 703 641
- US-A- 6 035 675
- US-B1- 6 233 986

## Description

The present invention relates to a steering locking device for preventing an automobile from being stolen, according to the preambles of claims 1, 2, and 8.

A steering locking device can generally lock a steering wheel as a steering member by operating an ignition key and release the locking. The steering locking device is constructed as a unit obtained by integrating a key cylinder for the ignition key and a locking device for regulating the rotation of a steering shaft. The unit is fixed to a column tube of a steering column.

The column tube requires high strength for prevention of steal. However, the column tube is in a hollow shape. Then the column tube is liable to be low in strength. Therefore, a reinforcing member is separately added to the column tube, or a high-cost and high-strength material is utilized. As a result, the cost of the steering apparatus rises.

Meanwhile, examples of the steering locking device include one so constructed that a locking device, described above, is remotely controllable so that a key cylinder and the locking device can be arranged apart from each other. Even in this type of steering locking device, a locking mechanism is arranged in a steering column, as in the above-mentioned steering locking device of the type constructed as a unit (see Japanese Patent Laid-Open Gazette No. 9-267713, for example).

Document FR-A-2 703 641 discloses a steering locking device for a steering apparatus of a vehicle, comprising steering locking means for locking a steering shaft so as not to be rotatable; a locking device main body for holding the steering locking means; and an electromagnetic actuator for operating the steering locking means, wherein the locking device main body is fixed to a vehicle body member for fixing the steering apparatus to a vehicle body.

Further, document W092 16395 A discloses a similar steering locking device.

An object of the present invention is to solve the above-mentioned technical problem and to provide a steering locking device in which the cost of a steering apparatus can be reduced. The above object is achieved by the steering locking devices of claims 1, 2, and 8.

In a mode of the present invention, a steering locking device for a steering apparatus of a vehicle comprises steering locking means for locking a steering shaft so as not to be rotatable; a locking device main body for holding the steering locking means; and an electromagnetic actuator for operating the steering locking means, the locking device main body being fixed to a housing which accommodates a torque sensor for sensing a steering torque and into which the steering shaft is inserted.

According to the mode, the housing accommodating the torque sensor generally has high strength. The locking device main body is supported on the housing having high strength. Accordingly, the locking device main body need not be reinforced, and the conventional necessity of reinforcing a column tube may be eliminated, thereby making it possible to reduce the cost of the steering apparatus.

In another mode, the locking device main body may be fixed to a vehicle body member for fixing the steering apparatus to a vehicle body. Since the vehicle body member is high in strength, the column tube or the like may not be reinforced, as in the above-mentioned case, thereby making it possible to reduce the cost of the steering apparatus.
Fig. 1 is a partially broken side view of an electric power steering apparatus having a steering locking device according to a first embodiment of the present invention;
Fig. 2 is a partially broken schematic view showing a principal part of an electric power steering apparatus having a steering locking device according to a second embodiment of the present invention;
Fig. 3 is a partially broken schematic view showing a principal part of the schematic construction of an electric power steering apparatus having a steering locking device according to a third embodiment of the present invention; and
Fig. 4 is a partially broken schematic view showing a principal part of an electric power steering apparatus having a steering locking device according to a fourth embodiment of the present invention.

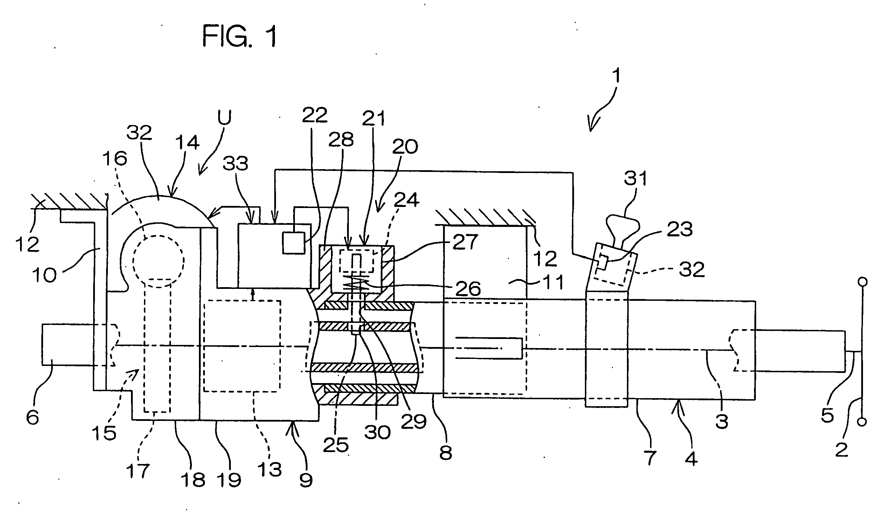

Embodiments of the present invention will be described while referring to the accompanying drawings. Fig. 1 is a partially broken side view showing the schematic construction of an electric power steering apparatus including a steering locking device according to a first embodiment of the present invention.

Referring to Fig. 1, a steering apparatus 1 has a steering shaft 3 for transmitting the movement of a steering wheel 2 in order to steer wheels (not shown), and a steering column 4 for supporting the steering shaft 3 so as to be rotatable with the steering shaft 3 inserted thereinto. The steering wheel 2 is connected to one end 5 of the steering shaft 3. A steering mechanism including a pinion, a rack shaft, and so on is connected to the other end 6 of the steering shaft 3 through an intermediate shaft (not shown) or the like. When the steering wheel 2 is rotated, the rotation is transmitted to the steering mechanism through the steering shaft 3, the intermediate shaft, and so on, thereby making it possible to steer the wheels.

The steering shaft 3 is composed of a plurality of members. The members are connected to one another so as to be integrally rotatable and are supported on the steering column 4 by a plurality of bearings (not shown).

The steering column 4 has an outer tube 7 and an inner tube 8 which serve as cylindrical column tubes arranged on the side of the steering wheel 2 for supporting the steering shaft 3 so as to be rotatable while accommodating the steering shaft 3, a housing 9 in a steering assist unit U fixed to the front of the inner tube 8, a lower bracket 10 fixed to the front of the inner tube 8 through the housing 9, and an upper bracket 11 fixed to the outer tube 7.

The steering column 4 is fixed to a predetermined vehicle body member 12 (only a part of which is illustrated, for example, a cross member of a vehicle body frame) through the lower bracket 10 and the upper bracket 11.

The steering apparatus 1 is constructed as an electric power steering apparatus, where a steering assist force balancing with a steering resistance caused by a steering operation is obtained by the steering assist unit U provided in the steering column 4.

That is, the steering assist unit U has a torque sensor 13 for sensing a steering torque, an electric motor 14 for producing a steering assist force on the basis of an output signal from the torque sensor 13, for example, a speed reduction gear 15 for decelerating the rotation of a rotatable shaft (not shown) of the electric motor 14, and the above-mentioned housing 9.

The speed reduction gear 15 has a worm shaft 16 serving as a driving shaft connected to the rotatable shaft of the electric motor 14 so as to be integrally rotatable through a coupling joint (not shown), a worm wheel 17 serving as a reduction gear engaged with the worm shaft 16 and driven by the worm shaft 16, and a reduction gear housing 18 for supporting the worm shaft 16 and the worm wheel 17 so as to be rotatable. The reduction gear housing 18 supports the electric motor 14.

The worm wheel 17 is connected to the steering shaft 3 so as to be integrally rotatable. The housing 9 in the steering assist unit U has the above-mentioned reduction gear housing 18, and a sensor housing 19 fixed to the rear of the reduction gear housing 18 and surrounding the steering shaft 3 while accommodating the torque sensor 13.

The steering apparatus 1 has a steering locking device 20 capable of achieving a locked state where the steering wheel 2 is difficult to operate for prevention of steal.

The steering locking device 20 comprises a locking mechanism section 21, a control section 22 for controlling the locking by the locking mechanism section 21 and the release of the locking, and a signal output section 23 for outputting a trigger signal to the control section 22.

The locking mechanism section 21 comprises an electromagnetic actuator 24 which is remotely controllable, a locking pin 25 serving as steering locking means operated by the electromagnetic actuator 24 and a spring 26, described later, a spring 26 serving as urging means for elastically urging the locking pin 25 into a locked state, and a locking device main body 27 for holding the locking pin 25 so as to be slidable between a locking position and a locking releasing position.

The locking device main body 27 is accommodated in an accommodating section 28 formed in the outer periphery of the sensor housing 19 and is fixed thereto. The accommodating section 28 is arranged at a position corresponding to a fitted portion of the sensor housing 19 and the inner tube 8.

On the other hand, the locking pin 25 is engageable with an engagement hole 30 formed in the steering shaft 3 through the bottom of the accommodating section 28 and a through hole 29 into which the inner tube 8 is inserted. The locking pin 25 is engaged with the engagement hole 30, thereby achieving steering locking.

Although in the present embodiment, the engagement hole 30 for the locking pin 25 is provided in the steering shaft 3, it may be provided in a cylindrical member fitted in the steering shaft 3 so as to be integrally rotatable. Although a single engagement hole 30 may be provided, a plurality of engagement holes are preferably provided. The engagement hole 30 may penetrate the cylindrical member or may have a bottom without penetrating the cylindrical member.

The signal output section 23 is composed of a key operating type ignition switch, for example, provided in a key cylinder 32 into which an ignition key 31 is inserted. The switch is a switch capable of switching an internal circuit by operating the ignition key 31 mounted on the key cylinder 32, and is also used as an engine starting switch. A signal for bringing the locking pin 25 into a locked state is outputted when the ignition key 31 inserted into the key cylinder 32 is rotated to be arranged at a first position, while a signal for releasing the locking is outputted when the ignition key 31 is arranged at a second position.

The control section 22 drives the electromagnetic actuator 24 through a driver (not shown) in response to the signal from the signal output section 23, to operate the locking pin 25.

The control section 22 is provided in an electronic control unit (ECU) 33 for the steering assist unit U. A large part of the construction of the control section 22 is also used as the electronic control unit 33, thereby simplifying the construction of the steering apparatus, and reducing the cost thereof. It is also possible to provide a control section dedicated to the steering locking device 20.

The electromagnetic actuator 24 is composed of a solenoid, for example, fixed to the locking device main body 27. A direct acting rod (not shown) which can advance and retreat from the solenoid upon being driven by the solenoid is connected to the locking pin 25 so as to be movable in synchronization therewith. It is also possible to utilize as the electromagnetic actuator 24 an electric motor or the like in addition to the solenoid.

At the time of locking, the electromagnetic actuator 24 is rendered non-conductive, so that the locking pin 25 urged by the spring 26 attempts to advance from the locking device main body 27. When the engagement hole 30 exists ahead of the locking pin 25 in the advance direction, the locking pin 25 is engaged with the engagement hole 30, thereby achieving locking. Even when the engagement hole 30 is shifted from the front of the locking pin 25, the steering wheel 2 is slightly rotated. Consequently, the engagement hole 30 and the locking pin 25 are aligned with each other so that the locking pin 25 enters the engagement hole 30, thereby achieving locking.

At the time of releasing locking, the electromagnetic actuator 24 is rendered conductive, so that the locking pin 25 which has received a force produced by the electromagnetic actuator 24 retreats into the locking device main body 27 against the urging force of the spring 26. Consequently, the engagement of the locking pin 25 and the engagement hole 30 is released so that locking is released, thereby making it possible to perform a steering operation.

According to the present embodiment, the locking device main body 27 need not be reinforced because it can be generally firmly fixed by the sensor housing 19 having high strength, and the conventional necessity of reinforcing the column tube is eliminated, thereby making it possible to reduce the cost of the steering apparatus 1.

Particularly, the locking device main body 27 is fixed to the accommodating section 28 in the fitted portion of the sensor housing 19 and the inner tube 8. Since the fitted portion is particularly high in strength, however, the locking device main body 27 is more firmly supported.

Furthermore, the locking device main body 27 is fixed to the housing 9 in the steering assist unit U. Accordingly, the steering assist unit U can be constructed as an integrally handleable unit including the locking mechanism section 21, and can be made easy to handle at the time of assembling.

As described in the foregoing, the construction of the steering apparatus 1 can be simplified by providing the control section 22 for steering locking in the electronic control unit 33 for the steering assist unit U. The electronic control unit 33 is generally supported on the steering apparatus 1. Accordingly, the electronic control unit 33 can be arranged near the electromagnetic actuator 24. As a result, the wiring distance between the electronic control unit 33 and the electromagnetic actuator 24 can be shortened. Consequently, time and labor for wiring work are not necessarily required.

Although in the present embodiment, the signal output section 23 is arranged in the key cylinder 32, the present invention is not limited to the same. For example, the signal output section 23 can be laid out at a free position where it is easily operated. Since the electromagnetic actuator 24 is utilized, a position to which the signal output section 23 is attached may be any position such as an instrument panel or a consol box of a vehicle in addition to the steering column.

The signal output section 23 is not limited to a key operating type ignition switch. For example, it is possible to utilize a known structure such as a control device operated by an IC card, a remote control device, or the like.

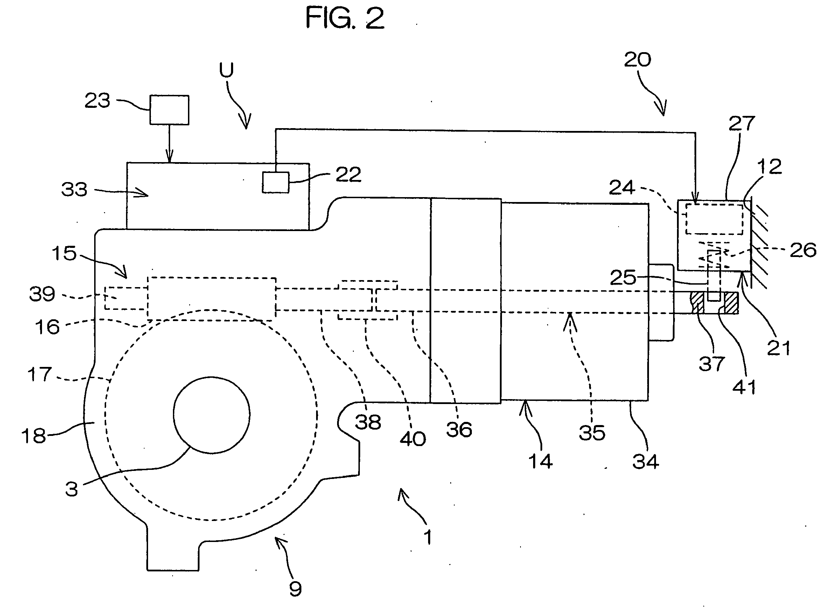

Although in the above-mentioned first embodiment, the locking device main body 27 is fixed to the sensor housing 19, it may be fixed to other strong members as in embodiments shown in Figs. 2, 3, and 4, described later, for example, any one of a motor housing 34 of an electric motor 14, a reduction gear housing 18, and vehicle body members.

The vehicle body members and particularly, the vehicle body member 12 for fixing the steering apparatus 1 is generally a strong member. Further, the motor housing 34 and the reduction gear housing 18 are generally members having higher strength than that of the column tube. Even if the locking device main body 27 is supported on any one of the vehicle body member 12, the motor housing 34, and the reduction gear housing 18, therefore, the locking device main body 27 can be firmly supported. Further, the conventional necessity of reinforcing the column tube may be eliminated. As a result, the cost of the steering apparatus 1 can be reduced.

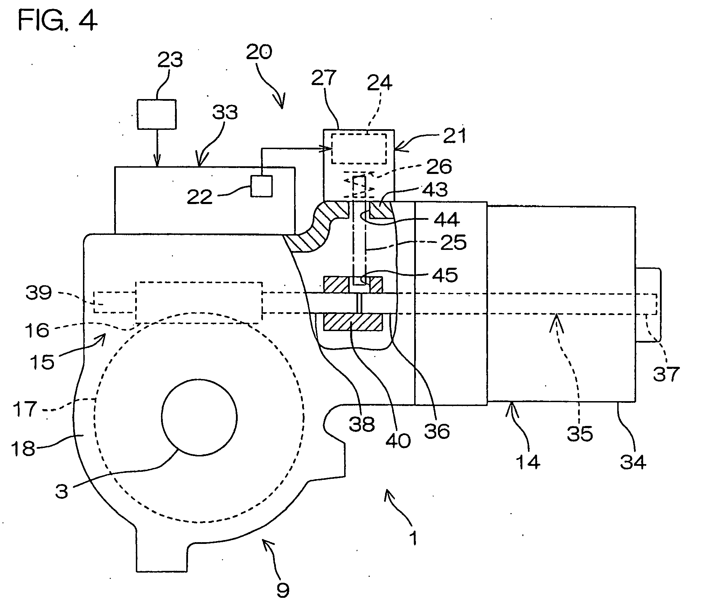

When the locking device main body 27 is fixed to the steering assist unit U, as in the embodiments shown in Figs. 1 and 4, it can be constructed as an integrally handleable unit including the locking mechanism section 21, and can be made easy to handle at the time of assembling.

As in each of the embodiments shown in Figs. 2, 3, and 4, the above-mentioned engagement hole 30 may be provided in members other than the steering shaft 3. Description is now made, centered at a point different from the point already described. The same components are assigned the same reference numerals and hence, the description thereof is not repeated.

Referring to Fig. 2, a steering apparatus 1 according to a second embodiment of the present invention will be described. In the present embodiment, a locking mechanism section 21 is arranged in the vicinity of an end of an electric motor 14 for assisting steering. A locking device main body 27 is fixed to a vehicle body member 12 serving as a fixing member. The vehicle body member 12 is a member for fixing a steering apparatus 1 to a vehicle body.

A rotatable shaft 35 of the electric motor 14 is arranged coaxially with a worm shaft 16 serving as a driving shaft of a speed reduction gear 15. The rotatable shaft 35 of the electric motor 14 has first and second ends 36 and 37, and the worm shaft 16 has first and second ends 38 and 39. The first end 36 of the rotatable shaft 35 and the first end 38 of the worm shaft 16 are connected to each other so as to be integrally rotatable through a coupling joint 40.

The second end 37 of the rotatable shaft 35 is led out of a motor housing 34, and an engagement hole 41 with which a locking pin 25 is engaged at the time of locking is formed at the led out second end 37. The engagement hole 41 may but need not penetrate the second end 37.

Although in the present embodiment, the locking pin 25 is engaged with the rotatable shaft 35 of the electric motor 14 at the time of locking, the speed reduction gear 15 is interposed in a torque transmission path between the electric motor 14 and a steering shaft 3. Consequently, even a steering locking device 20 having low strength can receive a large torque applied to the steering shaft 3 presumed when a vehicle is stolen and restrain the rotation of the steering shaft 3 without being damaged. The steering locking device 20 can be one low in strength and low in cost, thereby making it possible to reduce the cost of the steering apparatus 1.

Since the second end 37 of the rotatable shaft 35 of the electric motor 14 is led out of the motor housing 34, the locking device main body 27 is easy to attach, taken apart from a steering assist unit U. For example, a layout for fixing the locking device main body 27 to a vehicle body member 12 is easy to employ. Further, the construction of the steering assist unit U need not be greatly changed. For example, the rotatable shaft 35 may be slightly changed as the electric motor 14, and the speed reduction gear 15 need not be changed.

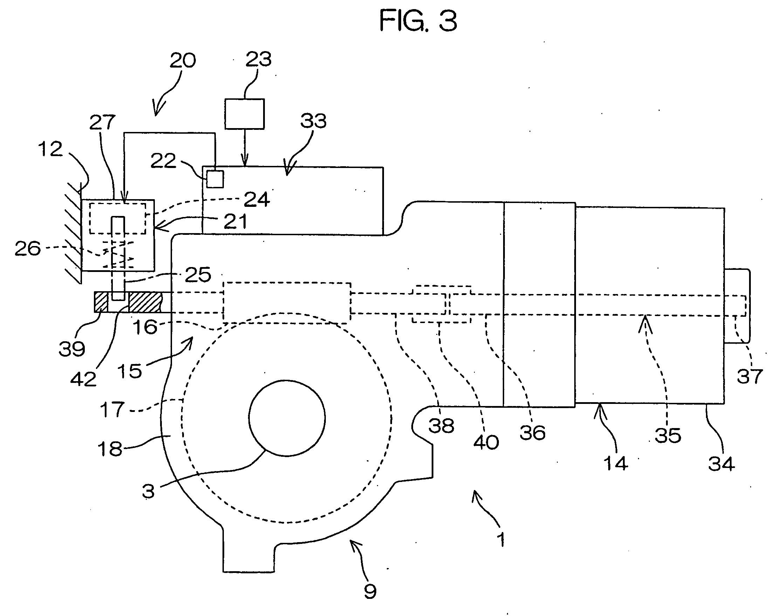

Referring to Fig. 3, a steering apparatus 1 according to a third embodiment of the present invention will be described. In the present embodiment, a locking mechanism section 21 is arranged in the vicinity of a speed reduction gear 15. A locking device main body 27 is fixed to the vehicle body member 12 described above, serving as a fixing member. A second end 39 of a worm shaft 16 of the speed reduction gear 15 on the opposite side of an electric motor 14 is led out of a reduction gear housing 18. An engagement hole 42 with which a locking pin 25 is engaged at the time of locking is formed at the second end 39 of the led worm shaft 16.

In the present embodiment, the second end 39 of the worm shaft 16 of the speed reduction gear 15 is led out of the reduction gear housing 18. Accordingly, the locking device main body 27 is easy to attach, taken apart from a steering assist unit U. For example, a layout for fixing the locking device main body 27 to a vehicle body member 12 is easy to employ. Therefore, the construction of the steering assist unit U need not be greatly changed. For example, the worm shaft 16 of the speed reduction gear 15 may be slightly changed, and an electric motor 14 need not be changed.

In each of the second and third embodiments, it is also considered that the locking device main body 27 is fixed to members constituting the steering apparatus 1, for example, the reduction gear housing 18, the sensor housing 19, and the motor housing 34. Even in such a case, the construction of the steering assist unit U need not be greatly changed in order to attach the locking device main body 27. For example, in the above-mentioned construction corresponding to the second or third embodiment, the electric motor 14 or the speed reduction gear 15 may be slightly changed.

Referring to Fig. 4, a steering apparatus 1 according to a fourth embodiment of the present invention will be described. In the present embodiment, a locking device main body 27 is fixed to a seat 43 provided in a portion, near an electric motor 14, of a reduction gear housing 18. A coupling joint 40 for connecting a rotatable shaft 35 of the electric motor 14 and a worm shaft 16 of a speed reduction gear 15 is accommodated in the reduction gear housing 18. A locking pin 25 is engaged with an engagement hole 45 formed in the outer periphery of the coupling joint 40 through a through hole 44 formed in the reduction gear housing 18.

According to the present embodiment, the locking device main body 27 is arranged between the electric motor 14 and the speed reduction gear 15. Accordingly, a steering assist unit U can be prevented from increasing in size along the axis of the rotatable shaft 35, thereby making it possible to contribute to miniaturization of the steering apparatus 1.

Since the locking pin 25 is engaged with the coupling joint 40, the construction of the steering assist unit U need not be greatly changed in order to attach the locking device main body 27. For example, the coupling joint 40 serving as a small component may be generally slightly changed, and the rotatable shaft 35 of the electric motor 14 and the worm shaft 16 of the speed reduction gear 15 need not be changed.

In the fourth embodiment, constructions in which the locking device main body 27 is fixed to members constituting the steering apparatus 1, for example, a motor housing 32 and a sensor housing 19, and constructions in which the locking device main body 27 is fixed to a vehicle body member 12, are also considered.

In the steering locking device 20 according to each of the above-mentioned embodiments, the locking device main body 27 need not be fixed to the column tube. When the steering locking device 20 is applied to a shock absorbing steering apparatus of a column contraction type for sliding a pair of column tubes having a double cylindrical structure relative to each other at the time of collision, therefore, a shock absorbing stroke can be kept long.

Particularly when the shock absorbing steering apparatus is an electric power steering apparatus of a column type that fixes an electric motor 14 for assisting steering to a steering column 4, there is less room for a hollow space around a steering shaft 3 in the axial direction, as compared with those in an electric power steering apparatus of another type and a manually operated steering apparatus. A shock absorbing stroke is liable to be shortened in not only the shock absorbing steering apparatus of a column contraction type but also in the shock absorbing steering apparatus of another type. Accordingly, it is preferable that the present invention in which the shock absorbing stroke can be kept long, as described above, is applied.

The present invention may be applied to an electric power steering apparatus of a type other than the column type, and to a manually operated steering apparatus. Further, as a steering mechanism, other known structures such as a structure of a rack and pinion type can be utilized.

## Claims

1. A steering locking device (20) for a steering apparatus (1) of a vehicle, comprising:
steering locking means (25) for locking a steering shaft (3) so as not to be rotatable;
a locking device main body (27) for holding the steering locking means (25); and
an electromagnetic actuator (24) for operating the steering locking means (25),
**characterized by**
the locking device main body (27) being fixed to a housing (19) which accommodates a torque sensor (13) for sensing a steering torque and into which the steering shaft (3) is inserted.

2. A steering locking device (20) for a steering apparatus (1) of a vehicle, comprising:
steering locking means (25) for locking a steering shaft (3) so as not to be rotatable;
a locking device main body (27) for holding the steering locking means (25); and
an electromagnetic actuator (24) for operating the steering locking means (25),
the locking device main body (27) being fixed to a vehicle body member (12) for fixing the steering apparatus (1) to a vehicle body,
**characterized in that** at the time of locking, the steering locking means (25) is engaged with an engagement section (41; 42; 45) provided in either one of a rotatable shaft (35) of an electric motor (14) for assisting steering and a member (16; 40) connected to the rotatable shaft (35) so as to be integrally rotatable therewith.

3. The device of claim 2, **characterized in that** the member (16; 40) connected to the rotatable shaft (35) so as to be integrally rotatable therewith includes a coupling joint (40) for connecting the rotatable shaft (35) and a driving shaft (16) of a speed reduction gear (15) for decelerating the rotation of the rotatable shaft (35).

4. The device of claim 2, **characterized in that** the member (16; 40) connected to the rotatable shaft (35) so as to be integrally rotatable therewith includes a driving shaft (16) of a speed reduction gear (15) for decelerating the rotation of the rotatable shaft (35).

5. The device of claim 3 or 4, **characterized in that** the driving shaft (16) includes a worm shaft (16).

6. The device of any of claims 2 - 5, **characterized in that**
the rotatable shaft (35) of the electric motor (14) comprises an end (37) led out of a housing (34) of the electric motor (14), and
the engagement section (41) with which the steering locking means (25) is engaged at the time of locking includes an engagement section (41) provided at the led out end (37).

7. The device of any of claims 2 - 5, **characterized in that**
a driving shaft (16) of a speed reduction gear (15) for decelerating the rotation of the rotatable shaft (35) of the electric motor (14) comprises an end (39) led out of the housing (18) of the speed reduction gear (15), and
the engagement section (42) with which the steering locking means (25) is engaged at the time of locking includes an engagement section (42) provided at the led out end (39) of the driving shaft (16).

8. A steering locking device (20) for a steering apparatus (1) of a vehicle, comprising:
steering locking means (25) for locking a steering shaft (3) so as not to be rotatable;
a locking device main body (27) for holding the steering locking means (25); and
an electromagnetic actuator (24) for operating the steering locking means (25),
**characterized by**
the locking device main body (27) being fixed to any one of a housing (34) of an electric motor (14) for assisting steering, a housing (18) of a speed reduction gear (15) for decelerating the rotation of a rotatable shaft (35) of the electric motor (14), and a vehicle body member (12) for fixing the steering apparatus (1) to a vehicle body, and
an engagement section (45) with which the steering locking means (25) is engaged at the time of locking, comprising an engagement section (45) provided in a coupling joint (40) for connecting a driving shaft (16) of the speed reduction gear (15) and the rotatable shaft (35) of the electric motor (14).

9. The device of any of claims 1 to 8, **characterized in that** a control section (22) for controlling the operations of the electromagnetic actuator (24) is provided in an electronic control unit (33) for controlling the operations of the electric motor (14) for assisting steering.

## Patentansprüche

1. Lenkverriegelungsvorrichtung (20) für eine Lenkvorrichtung (1) eines Fahrzeugs, mit:
Lenkverriegelungsmitteln (25) zum Verriegeln einer Lenkwelle (3), so, dass diese nicht drehbar ist;
einem Verriegelungsvorrichtungs-Hauptgehäuse (27) zum Halten bzw. Lagern der Lenkverriegelungsmittel (25); und
einem elektromagnetischen Aktuator (24) zum Betätigen der Lenkverriegelungsmittel (25),
**gekennzeichnet durch**
die Tatsache, dass das Verriegelungsvorrichtungs-Hauptgehäuse (27) an einem Gehäuse (19) festgelegt ist, das einen Drehmomentsensor (13) zum Erfassen eines Lenkdrehmomentes aufnimmt und in das die Lenkwelle (3) eingeführt ist.

2. Lenkverriegelungsvorrichtung (20) für eine Lenkvorrichtung (1) eines Fahrzeugs, mit:
Lenkverriegelungsmitteln (25) zum Verriegeln einer Lenkwelle (3), so, dass diese nicht drehbar ist;
einem Verriegelungsvorrichtungs-Hauptgehäuse (27) zum Halten bzw. Lagern der Lenkverriegelungsmittel (25); und
einem elektromagnetischen Aktuator (24) zum Betätigen der Lenkverriegelungsmittel (25),
wobei das Verriegelungsvorrichtungs-Hauptgehäuse (27) an einem Fahrzeugkarosserieelement (12) festgelegt ist, um die Lenkvorrichtung (1) an einer Fahrzeugkarosserie festzulegen, **dadurch gekennzeichnet, dass** die Lenkverriegelungsmittel (25) zum Zeitpunkt der Verriegelung an einem Eingriffsabschnitt (41; 42; 45) angreifen, der entweder an einer drehbaren Welle (35) eines elektrischen Motors (14) zum Unterstützen des Lenkens oder an einem Element (16; 40) vorgesehen ist, das mit der drehbaren Welle (35) drehfest verbunden ist.

3. Vorrichtung nach Anspruch 2, **dadurch gekennzeichnet, dass** das Element (16; 40), das drehfest mit der drehbaren Welle (35) verbunden ist, ein Kupplungsanschlussstück (40) zum Verbinden der drehbaren Welle (35) und einer Antriebswelle (16) eines Untersetzungsgetriebes (15) zum Herabsetzen der Drehzahl der drehbaren Welle (35) aufweist.

4. Vorrichtung nach Anspruch 2, **dadurch gekennzeichnet, dass** das Element (16; 40), das drehfest mit der drehbaren Welle (35) verbunden ist, eine Antriebswelle (16) eines Untersetzungsgetriebes (15) zum Herabsetzen der Drehzahl der drehbaren Welle (35) aufweist.

5. Vorrichtung nach Anspruch 3 oder 4, **dadurch gekennzeichnet, dass** die Antriebswelle (16) eine Schneckenwelle (16) aufweist.

6. Vorrichtung nach einem der Ansprüche 2 bis 5, **dadurch gekennzeichnet, dass**
die drehbare Welle (35) des elektrischen Motors (14) ein Ende (37) aufweist, das aus einem Gehäuse (34) des elektrischen Motors (14) herausgeführt ist; und
der Eingriffsabschnitt (41), an dem die Lenkverriegelungsmittel (25) zum Zeitpunkt der Verriegelung angreifen, einen Eingriffsabschnitt (41) aufweisen, der an dem herausgeführten Ende (37) vorgesehen ist.

7. Vorrichtung nach einem der Ansprüche 2 bis 5, **dadurch gekennzeichnet, dass**
eine Antriebswelle (16) eines Untersetzungsgetriebes (15) zum Herabsetzen der Drehzahl der drehbaren Welle (35) des elektrischen Motors (14) ein Ende (39) aufweist, das aus dem Gehäuse (18) des Untersetzungsgetriebes (15) herausgeführt ist, und
der Eingriffsabschnitt (42), an dem die Lenkverriegelungsmittel (25) zum Zeitpunkt des Verriegelns angreifen, einen Eingriffsabschnitt (42) aufweist, der an dem herausgeführten Ende (39) der Antriebswelle (16) vorgesehen ist.

8. Lenkverriegelungsvorrichtung (20) für eine Lenkvorrichtung (1) eines Fahrzeugs, mit:
Lenkverriegelungsmitteln (25) zum Verriegeln einer Lenkwelle (3), so, dass diese nicht drehbar ist;
einem Verriegelungsvorrichtungs-Hauptgehäuse (27) zum Halten bzw. Lagern der Lenkverriegelungsmittel (25); und
einem elektromagnetischen Aktuator (24) zum Betätigen der Lenkverriegelungsmittel (25),
**gekennzeichnet durch**
die Tatsache, dass das Verriegelungsvorrichtungs-Hauptgehäuse (27) an einem beliebigen der folgenden Elemente festgelegt ist, nämlich einem Gehäuse (34) eines elektrischen Motors (14) zum Unterstützen des Lenkens, einem Gehäuse (18) eines Untersetzungsgetriebes (15) zum Herabsetzen der Drehzahl einer drehbaren Welle (35) des elektrischen Motors (14), und einem Fahrzeugkarosserieelement (12) zum Festlegen der Lenkvorrichtung (1) an einer Fahrzeugkarosserie, und
einen Eingriffsabschnitt (45), mit dem die Lenkverriegelungsmittel (25) zum Zeitpunkt der Verriegelung in Eingriff stehen, mit einem Eingriffsabschnitt (45), der in einem Kupplungsanschlussstück (40) zum Verbinden einer Antriebswelle (16) des Untersetzungsgetriebes (15) und der drehbaren Welle (35) des elektrischen Motors (14) vorgesehen ist.

9. Vorrichtung nach einem der Ansprüche 1 bis 8, **dadurch gekennzeichnet, dass** ein Steuerabschnitt (22) zum Steuern der Betätigungen des elektromagnetischen Aktuators (24) in einer elektronischen Steuereinheit (33) zum Steuern der Betätigungen des elektrischen Motors (14) zum Unterstützen des Lenkens vorgesehen ist.

## Revendications

1. Dispositif de verrouillage de direction (20) pour un dispositif de direction (1) d'un véhicule, comprenant :
- un moyen de blocage de direction (25) pour bloquer un arbre de direction (3) de façon à ne pas pouvoir tourner ;
- un corps principal de dispositif de blocage (27) pour maintenir le moyen de blocage de direction (25) ; et
- un actionneur électromagnétique (24) pour actionner le moyen de blocage de direction (25) ;
**caractérisé en ce que** le corps principal de dispositif de blocage (27) est fixé sur un boîtier (19) logeant un capteur de couple (13) pour détecter un couple de direction et dans lequel est inséré l'arbre de direction (3).

2. Dispositif de verrouillage de direction (20) pour un dispositif de direction (1) d'un véhicule, comprenant :
- un moyen de blocage de direction (25) pour bloquer un arbre de direction (3) de façon à ne pas pouvoir tourner ;
- un corps principal de dispositif de blocage (27) pour maintenir le moyen de blocage de direction (25) ; et
- un actionneur électromagnétique (24) pour actionner le moyen de blocage de direction (25) ;
le corps principal de dispositif de blocage (27) étant fixé sur une pièce de carrosserie de véhicule (12) pour fixer le dispositif de direction (1) sur une carrosserie de véhicule ;
**caractérisé en ce qu'**au moment du verrouillage, le moyen de blocage de direction (25) est engagé par une section d'engagement (41 ; 42 ; 45) prévue dans soit un arbre rotatif (35) d'un moteur électrique (14) pour assister la direction, soit une pièce (16 ; 40) connectée à l'arbre rotatif (35) de façon à tourner, de façon intégrale, avec ce dernier.

3. Dispositif selon la revendication 2, **caractérisé en ce que** la pièce (16 ; 40) connectée à l'arbre rotatif (35) de façon à tourner intégralement avec ce dernier comprend un joint d'accouplement (40) pour connecter l'arbre rotatif (35) et un arbre d'entraînement (16) d'un engrenage de réduction de vitesse (15) pour décélérer la rotation de l'arbre rotatif (35).

4. Dispositif selon la revendication 2, **caractérisé en ce que** la pièce (16 ; 40) connectée à l'arbre rotatif (35) de façon à tourner intégralement avec ce dernier comprend un arbre d'entraînement (16) d'un engrenage de réduction de vitesse (15) pour décélérer la rotation de l'arbre rotatif (35).

5. Dispositif selon la revendication 3 ou 4, **caractérisé en ce que** l'arbre d'entraînement (16) comprend un arbre à vis (16).

6. Dispositif selon l'une quelconque des revendications 2 à 5, **caractérisé en ce que** :
l'arbre rotatif (35) du moteur électrique (14) comprend une extrémité (37) sortant d'un carter (34) du moteur électrique (14) ; et
la section d'engagement (41) avec laquelle est engagé le moyen de blocage de direction (25) au moment du verrouillage comprend une section d'engagement (41) prévue sur l'extrémité de sortie (37).

7. Dispositif selon l'une quelconque des revendications 2 à 5, **caractérisé en ce que** :
un arbre d'entraînement (16) d'un engrenage de réduction de vitesse (15) pour décélérer la rotation de l'arbre rotatif (35) du moteur électrique (14) comprend une extrémité (39) sortant du boîtier (18) de l'engrenage de réduction de vitesse (15) ; et
la section d'engagement (42) avec laquelle est engagé le moyen de blocage de direction (25) au moment du verrouillage comprend une section d'engagement (42) prévue sur l'extrémité de sortie (39) de l'arbre d'entraînement (16).

8. Dispositif de verrouillage de direction (20) pour un dispositif de direction (1) d'un véhicule, comprenant :
- un moyen de blocage de direction (25) pour bloquer un arbre de direction (3) de façon à ne pas pouvoir tourner ;
- un corps principal de dispositif de blocage (27) pour maintenir le moyen de blocage de direction (25) ; et
- un actionneur électromagnétique (24) pour actionner le moyen de blocage de direction (25) ;
**caractérisé en ce que** :
le corps principal de dispositif de blocage (27) est fixé sur une pièce quelconque parmi un carter (34) d'un moteur électrique (14) pour l'assistance de direction, un boîtier (18) d'un engrenage de réduction de vitesse (15) pour décélérer la rotation d'un arbre rotatif (35) du moteur électrique (14), et une pièce de carrosserie de véhicule (12) pour fixer le dispositif de direction (1) sur une carrosserie de véhicule ; et
une section d'engagement (45) avec laquelle est engagé le moyen de blocage de direction (25) au moment du verrouillage comprend une section d'engagement (45) prévue dans un joint d'accouplement (40) pour connecter un arbre d'entraînement (16) de l'engrenage de réduction de vitesse (15) et l'arbre rotatif (35) du moteur électrique (14).

9. Dispositif selon l'une quelconque des revendications 1 à 8, **caractérisé en ce qu'**une section de commande (22) pour commander les opérations de l'actionneur électromagnétique (24) est prévue dans une unité de commande électronique (33) pour commander les opérations du moteur électrique (14) pour l'assistance de direction.
